# EUROPEAN PATENT APPLICATION

(11) **EP 2 890 131 A1**
(43) Date of publication of application: **01.07.2015**
(21) Application number: 13461570.7
(22) Date of filing: 31.12.2013
(51) Int. Cl.: H04N 19/59, H04N 19/159, H04N 19/132, H04N 19/44, H04N 21/2343, H04N 7/18, H04N 21/4402, H04N 19/156

(54) **Video coding with different spatial resolutions for intra-coded frames and inter-coded frames**

(71) Applicant: Patents Factory Ltd. Sp. z o.o., 65-043 Zielona Gora (PL)
(72) Inventor: Paczkowski, Jacek, 65-043 Zielona Gora (PL)
(74) Representative: Pawlowski, Adam

(57) **Abstract**

A method for encoding of a video signal comprising source frames (S) by utilizing inter frame prediction coding, the method comprising the steps of: determining (202) whether a source frame (S) is to be encoded as an intra coded frame (I) or inter coded frame (P, B); encoding (203) the intra coded frames (I) in an intra coded frame resolution (HR); encoding (204) the inter coded frames (P, B) in an inter coded frames resolution (LR) which is lower than the intra coded frame resolution (HR).

## Description

The present invention relates to a system and method for coding of digital video signals, wherein the signal is encoded in two different resolutions. The invention is applicable in particular to digital video surveillance systems.

When selecting a scheme for coding of digital video signals one has to compromise between the signal resolution, frame rate and compression ratio. Digital video surveillance systems, wherein large amounts of data are to be stored (such as 1-week recordings from a plurality of cameras), are often configured to store relatively low resolution signal with a high compression ratio. In some situations, the low resolution of the signal makes it impossible to recognize particular objects, such as a face of a person captured on a video frame. The resolution of recordings is often lower than the resolution of video cameras used and can be easily increased by recording full resolution signal, but this results in a large amount of storage space necessary to store the recorded signal.

A US patent application US2007/0071104 presents a picture coding device which has: a coding controlling unit which decides whether or not a to-be-coded picture is to be coded as a high-resolution picture or a low-resolution picture, depending on a picture type of the to-be-coded picture; the first down-conversion unit which down-converts resolution of the to-be-coded picture, when the to-be-coded picture is decided to be coded as a low-resolution picture; the second down-conversion unit which down-converts resolution of a reference picture, when the reference picture is referred to by the to-be-coded picture decided to be coded as a low-resolution picture; and a motion estimation unit, a mode selection unit, a difference operation unit, and a residual coding unit which code the to-be-coded picture whose resolution is down-converted by the first down-conversion unit, referring to the reference picture whose resolution is down-converted by the second down-conversion unit. Therefore, the output signal has a variable resolution, depending on the contents of the input signal. It is not applicable to video surveillance systems aimed to solve the problems described below.

The aim of the present invention is to provide a method for video signal recording which will make it possible to record at least part of the signal with a high resolution, while allowing to keep high frame rate and moderate storage space requirements.

The object of the invention is a method for encoding of a video signal comprising source frames by utilizing inter frame prediction coding, the method comprising the steps of: determining whether a source frame is to be encoded as an intra coded frame or inter coded frame; encoding the intra coded frames in an intra coded frame resolution; encoding the inter coded frames in an inter coded frames resolution which is lower than the intra coded frame resolution.

Preferably, the intra coded frame resolution is the same as the source frame resolution.

Preferably, the inter coded frames are forward predicted frames and/or bi-directional predicted frames.

Preferably, the method further comprises the steps of: down-converting all source frames to an inter coded frames resolution; encoding the inter coded frames which are predicted from an intra-coded frame with reference to the down-converted source frame for the intra-coded frame.

Preferably, the source frames are down-converted to an inter coded frames resolution by scaling down.

Preferably, the source frames are down-converted to an inter coded frames resolution by cropping a selected fragment of the frame.

The object of the invention is also a computer program comprising program code means for performing all the steps of the above-described method when said program is run on a computer, as well as a computer readable medium storing computer-executable instructions performing all the steps of the above-described method when executed on a computer.

Another object of the invention is a video signal encoder for encoding a source video signal comprising source frames comprising: an inter frame prediction encoder configured to determine whether a source frame is to be encoded as an intra coded frame or inter coded frame; a resolution converter connected between the source signal source and the inter frame prediction encoder configured to convert a frame from a higher resolution to a lower resolution; wherein the inter frame prediction encoder is configured to encode the intra coded frames in an intra coded frame resolution and encode the inter coded frames in an inter coded frames resolution which is lower than the intra coded frame resolution.

The invention further relates to a method for decoding of a video signal encoded utilizing inter frame prediction coding, the video signal comprising intra coded frames in an intra coded frame resolution and inter coded frames in an inter coded frames resolution which is lower than the intra coded frame resolution, the method comprising the steps of: determining whether the video signal is to be output in a higher resolution or a lower resolution; if the signal is to be output in a higher resolution, decoding and outputting the intra coded frames and skipping inter coded frames; if the signal is to be output in a lower resolution, decoding all frames, down-converting the resolution of intra coded frames to the inter coded frame resolution and outputting all frames in the intra coded frame resolution.

The object of the invention is also a computer program comprising program code means for performing all the steps of the above-described method when said program is run on a computer, as well as a computer readable medium storing computer-executable instructions performing all the steps of the above-described method when executed on a computer.

A further object of the invention is a video signal decoder for decoding of a video signal encoded utilizing inter frame prediction coding, the video signal comprising intra coded frames in an intra coded frame resolution and inter coded frames in an inter coded frames resolution which is lower than the intra coded frame resolution, the decoder comprising: a quality selector configured to select whether the video signal is to be output in a higher resolution or a lower resolution; a resolution converter configured to convert a frame from a higher resolution to a lower resolution; an intra frame prediction decoder configured to: if the signal is to be output in a higher resolution, to decode and output the intra coded frames and skip inter coded frames; if the signal is to be output in a lower resolution, decode all frames, down-convert the resolution of intra coded frames to the inter coded frame resolution using the resolution converter and output all frames in the intra coded frame resolution.

The invention also relates to a surveillance system comprising at least one camera connected to a video signal encoder as described above, which is connected to a data storage, which is connected to a video signal decoder as described above.

The method and system have been presented by means of exemplary embodiments on a drawing, in which:
Fig. 1 presents a structure of an encoder;
Fig. 2 presents a method of encoding;
Fig. 3 presents a structure of an encoded signal;
Fig. 4 presents a structure of a decoder;
Fig. 5 presents a first method of decoding;
Fig. 6 presents a second method of decoding;
Fig. 7 presents a surveillance system.

The source signal is encoded as follows.

The source signal, comprising source frames S in a source frames resolution (such as a Full HD resolution of 1920x1080 points, or even higher when individual frames are captured with resolution of dozens of megapixels) is collected from an image source 101 (such as a video camera). The source signal frames are input to resolution converters. The first converter 102, converts the source frames to a lower resolution LR frames. The second converter 103, which is optional, may convert the source frames to a resolution HR which is higher than the lower resolution LR. Alternatively, the source frames having resolution SR can be provided directly as the higher resolution HR frames.

The source frames are input to an inter frame prediction encoder 104, which utilizes an inter-frame prediction technology and outputs an output video signal comprising:
- intra frames (I) which are intra-coded and can be decoded without information on other frames
- inter frames (P, B) which are inter-coded and can be decoded with reference to other frames. The inter frames can be forward-predicted frames (P) which reference to a previous frame or bi-directional predicted frames (B) which reference to a previous and/or next frame.

The encoder 104 is configured to encode the inter frames P, B in a resolution LR lower than the higher resolution HR in which intra frames I are encoded.

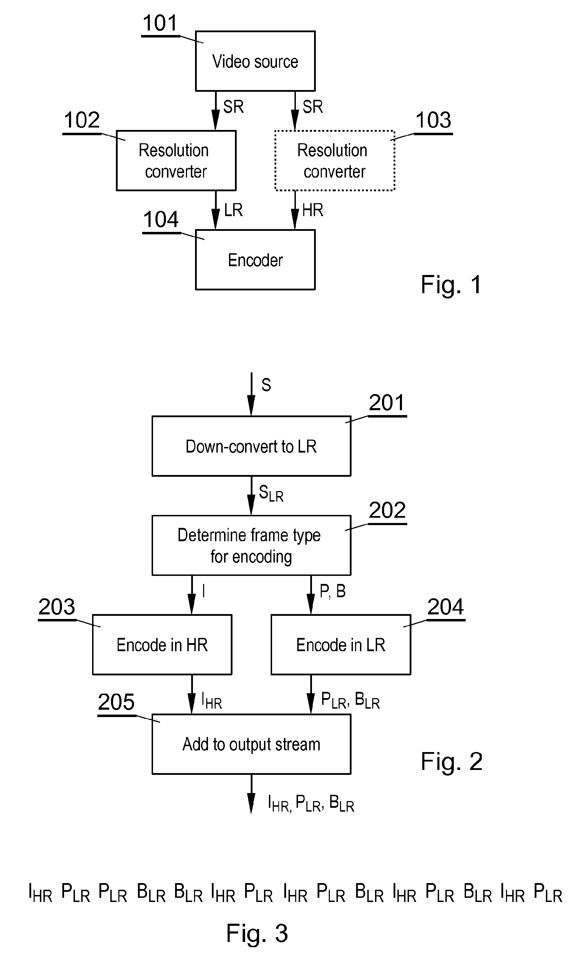

The encoding method is illustrated in Fig. 2. All source frames are down-converted to lower resolution in step 201. Then, the encoder determines in step 202 whether the particular source frame is to be encoded as an intra frame I or inter frame P, B. Intra frames I are encoded in the higher resolution HR in step 203 on the basis of the source frames of original resolution S. Intra frames P, B are encoded in the lower resolution LR in step 204 on the basis of the source frames down-converted to the lower resolution S_{LR}. In an intra frame P, B references to an inter frame I, the version of the source frame for that intra frame I which is down-converted to lower resolution LR is used as a reference. The encoded frame is added to the output encoded stream in step 205.

In the embodiment shown in Fig. 2, the frame type for encoding is determined on the basis of the down-converted resolution source frames S_{LR}. Alternatively, the decision may be made on original source frames S, and the down-conversion can be performed later, i.e. steps 201 and 202 may be interchanged. The embodiment shown in Fig. 2 requires less processing power, while the alternative embodiment may result in better quality of the encoded signal.

Therefore, the output signal has a structure as shown for example in Fig. 3. It comprises intra frames I_{HR} of a higher resolution HR and intra-frames P_{LR}, B_{LR} of a lower resolution LR. The structure of Signac in Fig. 3 is non-regular, i.e. the I, P, B frames are irregularly arranged, but it may have also more regular structure, such as {I_{HR} B_{LR} B_{LR} P_{LR} B_{LR} B_{LR} P_{LR} B_{LR} B_{LR} P_{LR} B_{LR} B_{LR} I_{HR} B_{LR} B_{LR} P_{LR} B_{LR} B_{LR} P_{LR} B_{LR} B_{LR} P_{LR} B_{LR} B_{LR} I_{HR}}, depending on the coding algorithm used.

The encoded signal can be decoded in two ways.

The encoded signal, comprising intra coded frames I in a higher resolution HR and inter coded frames P, B in a lower resolution is received from an encoded signal source 401, such as a storage device or directly from the encoder of Fig. 1. The frames are decoded in a decoder 402. High resolution frames can be either output directly as decoded frames or can be down-converted in a resolution converter 403 to a lower resolution LR to be output as decoded frames and as a reference to inter predicted frames to be decoded. The decoder 404 comprises a quality selector configured to select whether the first or second method of decoding shall be used.

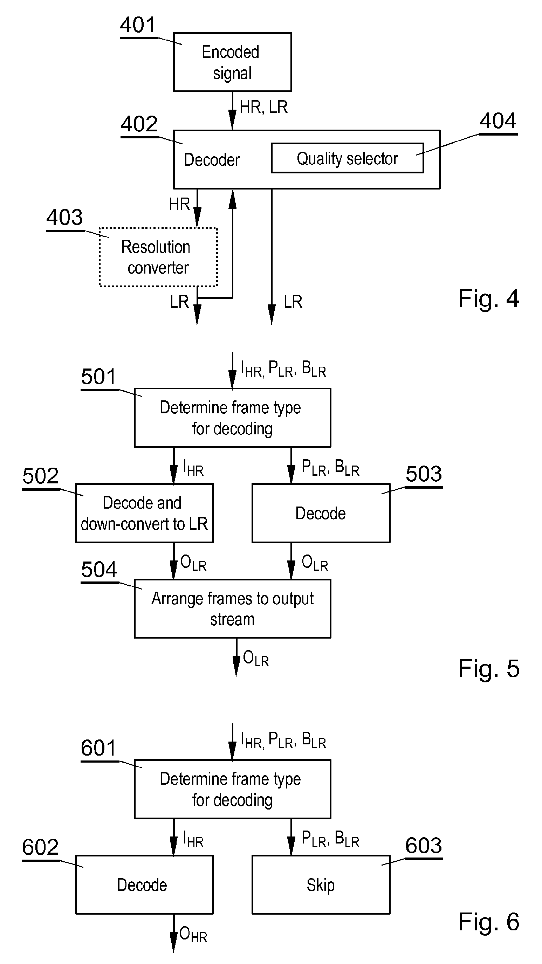

The first method of decoding is shown in Fig. 5 and is directed to providing an output signal having a low resolution and high frame rate. The encoded signal is received and the type of frame is detected in step 501. The intra coded frames are down-converted to the lower resolution LR in step 502. In step 503, the frames are decoded to output frames O having the lower resolution LR. Intra-coded frames I of lower resolution LR are used as reference frames to decode the inter coded frames P, B. The output frames are then arranged to form output stream in step 504.

The second method of decoding is shown in Fig. 6 and is directed to providing an output signal having a high resolution and low frame rate. The encoded signal is received and the type of frame is detected in step 601. The intra coded frames are decoded in step 602 and provided as higher resolution output frames O. The inter coded frames P, B are skipped in step 603.

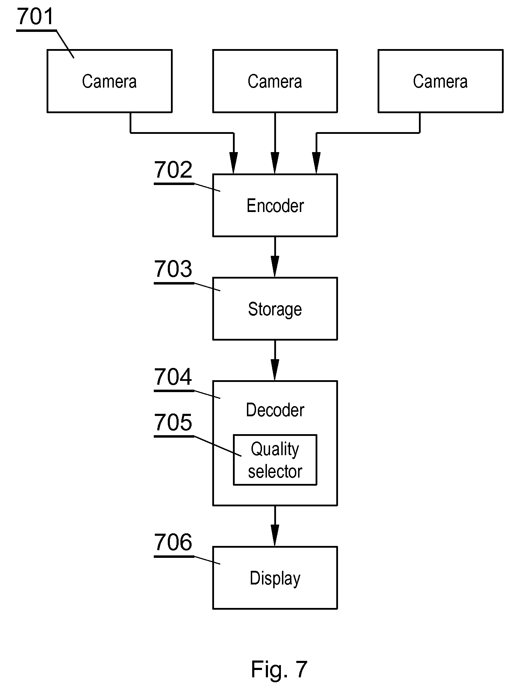

Fig. 7 presents an example of a surveillance system. The system comprises a plurality of video camera(s) 701 which provide a high resolution signal HR to an encoder 702 as shown in Fig. 1. The encoder encodes the signal(s) from camera(s) according to the method of Fig. 2 and outputs an encoded signal comprising high resolution HR intra frames I and low resolution inter frames P, B. The encoded signal is stored in a data storage 703, such as a hard disk. The signal from the storage or directly from the encoder can be decoded by a decoder 704 as shown in Fig. 4. The decoder 704 comprises an output quality selector 705 which determines whether the output signal shall comprise high resolution frames at a low frame rate or low resolution frames at a high frame rate, which are then displayed on a display 706.

It shall be noted that the conversion of frame resolution can be implemented by two ways. First, the frame can be scaled, i.e. the whole contents of the frame can be enlarged or decreased. Second, the frame can be down-converted by cropping, i.e. selecting a fragment of the frame (such as a central fragment) - in such a case, the intra frames comprise the full scene captured by the camera and the inter frames comprise only the middle section of the scene.

The double resolution video signal coding as described above is particularly useful for surveillance systems for the following reasons. It provides low resolution data of high frame rate for typical surveillance applications, such as monitoring of movements of objects. Furthermore, it provides high resolution data for detection of objects (such as faces of persons, plate numbers of vehicles) - at a low frame rate, which is however sufficient for most applications, wherein a single picture is necessary to detect the object.

It can be easily recognized, by one skilled in the art, that the aforementioned methods for signal encoding and decoding may be performed and/or controlled by one or more computer programs. Such computer programs are typically executed by utilizing the computing resources of an encoder or decoder device. The computer programs can be stored in a non-volatile memory (or otherwise a non-transitory computer storage medium), for example a flash memory or in a volatile memory, for example RAM and are executed by a processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the features of the appended claims is envisaged in the present application.

## Claims

1. A method for encoding of a video signal comprising source frames (S) by utilizing inter frame prediction coding, the method comprising the steps of:
- determining (202) whether a source frame (S) is to be encoded as an intra coded frame (I) or inter coded frame (P, B);
- encoding (203) the intra coded frames (I) in an intra coded frame resolution (HR);
- encoding (204) the inter coded frames (P, B) in an inter coded frames resolution (LR) which is lower than the intra coded frame resolution (HR).

2. The method according to claim 1, wherein the intra coded frame resolution (HR) is the same as the source frame resolution (SR).

3. The method according to any of previous claims, wherein the inter coded frames are forward predicted frames (P) and/or bi-directional predicted frames (B).

4. The method according to any of previous claims, further comprising the steps of:
- down-converting (201) all source frames (S) to an inter coded frames resolution (LR);
- encoding the inter coded frames (P, B) which are predicted from an intra-coded frame (I) with reference to the down-converted source frame (S) for the intra-coded frame (I).

5. The method according to any of previous claims, wherein the source frames (S) are down-converted to an inter coded frames resolution (LR) by scaling down.

6. The method according to any of previous claims, wherein the source frames (S) are down-converted to an inter coded frames resolution (LR) by cropping a selected fragment of the frame.

7. A computer program comprising program code means for performing all the steps of the method according to any of claims 1-6 when said program is run on a computer.

8. A computer readable medium storing computer-executable instructions performing all the steps of the method according to any of claims 1-6 when executed on a computer.

9. A video signal encoder for encoding a source video signal comprising source frames (S) comprising:
- an inter frame prediction encoder (104) configured to determine whether a source frame (S) is to be encoded as an intra coded frame (I) or inter coded frame (P, B);
- a resolution converter (102) connected between the source signal source (101) and the inter frame prediction encoder (104) configured to convert a frame from a higher resolution (HR) to a lower resolution (LR);
- wherein the inter frame prediction encoder is configured to encode the intra coded frames (I) in an intra coded frame resolution (HR) and encode (204) the inter coded frames (P, B) in an inter coded frames resolution (LR) which is lower than the intra coded frame resolution (HR).

10. A method for decoding of a video signal encoded utilizing inter frame prediction coding, the video signal comprising intra coded frames (I) in an intra coded frame resolution (HR) and inter coded frames (P, B) in an inter coded frames resolution (LR) which is lower than the intra coded frame resolution (HR), the method comprising the steps of:
- determining whether the video signal is to be output in a higher resolution (HR) or a lower resolution (LR)
- if the signal is to be output in a higher resolution (HR), decoding and outputting the intra coded frames (I) and skipping inter coded frames (P, B);
- if the signal is to be output in a lower resolution (LR), decoding all frames (I, P, B), down-converting the resolution of intra coded frames (I) to the inter coded frame resolution (LR) and outputting all frames (I, P, B) in the intra coded frame resolution (LR).

11. A computer program comprising program code means for performing all the steps of the method according to claim 10 when said program is run on a computer.

12. A computer readable medium storing computer-executable instructions performing all the steps of the method according to claim 10 when executed on a computer.

13. A video signal decoder for decoding of a video signal encoded utilizing inter frame prediction coding, the video signal comprising intra coded frames (I) in an intra coded frame resolution (HR) and inter coded frames (P, B) in an inter coded frames resolution (LR) which is lower than the intra coded frame resolution (HR), the decoder comprising:
- a quality selector (404) configured to select whether the video signal is to be output in a higher resolution (HR) or a lower resolution (LR);
- a resolution converter (403) configured to convert a frame from a higher resolution (HR) to a lower resolution (LR);
- an intra frame prediction decoder (402) configured to:
- if the signal is to be output in a higher resolution (HR), to decode and output the intra coded frames (I) and skip inter coded frames (P, B);
- if the signal is to be output in a lower resolution (LR), decode all frames (I, P, B), down-convert the resolution of intra coded frames (I) to the inter coded frame resolution (LR) using the resolution converter (403) and output all frames (I, P, B) in the intra coded frame resolution (LR).

14. A surveillance system comprising at least one camera (701) connected to a video signal encoder (702) according to claim 9, which is connected to a data storage (703), which is connected to a video signal decoder (704) according to claim 13.

## Amended claims

### Amended claims in accordance with Rule 137(2) EPC.

1. A method for encoding of a video signal comprising source frames (S) by utilizing inter frame prediction coding, the method comprising the steps of:
- determining (202) whether a source frame (S) is to be encoded as an intra coded frame (I) or an inter coded frame (P, B);
- encoding (203) the intra coded frames (I) in an intra coded frame spatial resolution (HR);
the method being **characterized in that** it further comprises the steps of
- encoding (204) the inter coded frames (P, B) in an inter coded frames spatial resolution (LR) which is lower than the intra coded frame resolution (HR); and
- outputting an output signal comprising intra frames (I_{HR}) of a higher spatial resolution (HR) and inter-frames (P_{LR}, B_{LR}) of a lower spatial resolution (LR).

2. The method according to claim 1, wherein the intra coded frame spatial resolution (HR) is the same as the source spatial frame resolution (SR).

3. The method according to any of previous claims, wherein the inter coded frames are forward predicted frames (P) and/or bi-directional predicted frames (B).

4. The method according to any of previous claims, further comprising the steps of:
- down-converting (201) all source frames (S) to an inter coded frames spatial resolution (LR);
- encoding the inter coded frames (P, B) which are predicted from an intra-coded frame (I) with reference to the down-converted source frame (S) for the intra-coded frame (I).

5. The method according to any of previous claims, wherein the source frames (S) are down-converted to an inter coded frames spatial resolution (LR) by scaling down.

6. The method according to any of previous claims, wherein the source frames (S) are down-converted to an inter coded frames spatial resolution (LR) by cropping a selected fragment of the frame.

7. A computer program comprising program code means for performing all the steps of the method according to any of claims 1-6 when said program is run on a computer.

8. A computer readable medium storing computer-executable instructions performing all the steps of the method according to any of claims 1-6 when executed on a computer.

9. A video signal encoder for encoding a source video signal comprising source frames (S) comprising:
- an inter frame prediction encoder (104) configured to determine whether a source frame (S) is to be encoded as an intra coded frame (I) or inter coded frame (P, B);
- a resolution converter (102) connected between the source signal source (101) and the inter frame prediction encoder (104) configured to convert a frame from a higher spatial resolution (HR) to a lower spatial resolution (LR);
the video signal encoder being **characterised in that**
- the inter frame prediction encoder is configured to encode the intra coded frames (I) in an intra coded frame spatial resolution (HR) and encode (204) the inter coded frames (P, B) in an inter coded frames spatial resolution (LR) which is lower than the intra coded frame spatial resolution (HR); and
- wherein the encoder is is configured to output a signal comprising intra frames (I_{HR}) of a higher spatial resolution (HR) and inter-frames (P_{LR}, B_{LR}) of a lower spatial resolution (LR).

10. A method for decoding of a video signal encoded utilizing inter frame prediction coding, the video signal comprising intra coded frames (I) in an intra coded frame spatial resolution (HR) and inter coded frames (P, B) in an inter coded frames spatial resolution (LR) which is lower than the intra coded frame spatial resolution (HR), the method comprising the steps of:
- determining whether the video signal is to be output in a higher spatial resolution (HR) or a lower spatial resolution (LR)
- if the signal is to be output in a higher spatial resolution (HR), decoding and outputting the intra coded frames (I) and skipping inter coded frames (P, B);
- if the signal is to be output in a lower spatial resolution (LR), decoding all frames (I, P, B), down-converting the spatial resolution of intra coded frames (I) to the inter coded frame spatial resolution (LR) and outputting all frames (I, P, B) in the inter coded frame spatial resolution (LR).

11. A computer program comprising program code means for performing all the steps of the method according to claim 10 when said program is run on a computer.

12. A computer readable medium storing computer-executable instructions performing all the steps of the method according to claim 10 when executed on a computer.

13. A video signal decoder for decoding of a video signal encoded utilizing inter frame prediction coding, the video signal comprising intra coded frames (I) in an intra coded frame spatial resolution (HR) and inter coded frames (P, B) in an inter coded frames spatial resolution (LR) which is lower than the intra coded frame spatial resolution (HR), the decoder comprising:
- a quality selector (404) configured to select whether the video signal is to be output in a higher spatial resolution (HR) or a lower spatial resolution (LR);
- a resolution converter (403) configured to convert a frame from a higher spatial resolution (HR) to a lower spatial resolution (LR);
- an intra frame prediction decoder (402) configured to:
- if the signal is to be output in a higher spatial resolution (HR), to decode and output the intra coded frames (I) and skip inter coded frames (P, B);
- if the signal is to be output in a lower spatial resolution (LR), decode all frames (I, P, B), down-convert the resolution of intra coded frames (I) to the inter coded frame spatial resolution (LR) using the resolution converter (403) and output all frames (I, P, B) in the inter coded frame spatial resolution (LR).

14. A surveillance system comprising at least one camera (701) connected to a video signal encoder (702) according to claim 9, which is connected to a data storage (703), which is connected to a video signal decoder (704) according to claim 13.
